# EUROPÄISCHE PATENTSCHRIFT

(11) **EP 1 140 580 B1**
(45) Veröffentlichungstag und Bekanntmachung des Hinweises auf die Patenterteilung: **18.01.2006**
(21) Anmeldenummer: 00983017.5
(22) Anmeldetag: 17.10.2000
(51) Int. Cl.: B60S 1/04

(54) **AUS EINEM HALTEELEMENT UND EINER SCHEIBEN-WISCHVORRICHTUNG BESTEHENDE BAUEINHEIT**
STRUCTURAL UNIT CONSISTING OF A HOLDING ELEMENT AND A WINDSCREEN-WIPING DEVICE
UNITE COMPOSEE D'UN ELEMENT DE RETENUE ET D'UN DISPOSITIF D'ESSUIE-GLACE

(30) Priorität: 19.10.1999 DE 19950214
(43) Veröffentlichungstag der Anmeldung: 10.10.2001
(73) Patentinhaber: ROBERT BOSCH GMBH, 70442 Stuttgart (DE)
(72) Erfinder: KOTLARSKI, Thomas, 370 04 Ceské Budejovice (CZ)
(74) Vertreter: Gleiss & Grosse
(86) Internationale Anmeldenummer: PCT/DE2000/003635
(87) Internationale Veröffentlichungsnummer: WO 2001/028824

(56) Entgegenhaltungen:
- EP-A- 0 685 657
- EP-A- 0 798 183
- DE-A- 19 739 842
- FR-A- 2 770 880

## Beschreibung

Die Erfindung betrifft eine Baueinheit aufweisend ein Halteelement und eine Scheibenwischvorrichtung, wobei die Scheiben-Wischvorrichtung lösbar mit dem Halteelement verbunden ist.

### Stand der Technik

Bekannte Baueinheiten bestehend aus einem Halteelement und einer Scheiben-Wischvorrichtung eines Fahrzeugs sind sowohl in Bezug auf ihren konstruktiven Aufbau als auch hinsichtlich ihrer Handhabbarkeit kompliziert und bedienungsunfreundlich. Dies führt zu einer zeitaufwendigen Montage beziehungsweise Befestigung einer Scheiben-Wischvorrichtung an dem Halteelement eines Fahrzeugs, gegebenenfalls unter zusätzlicher Anwendung von Montage- beziehungsweise Befestigungshilfsmitteln.

Aus der DE 197 39 842 A1 geht eine Wischeranlage hervor, bei der die Befestigung des Wischerlagers über eine Rastverbindung in einer Montageöffnung gehalten ist. Zur Ausbildung der Rastverbindung werden kompliziert profilierte Bauteile eingesetzt.

### Vorteile der Erfindung

Die erfindungsgemäße Baueinheit gemäß dem Oberbegriff des Anspruchs 1 ist dadurch gekennzeichnet, dass das Halteelement ein Halteblech ist, aus dessen Grundfläche wenigstens ein Einrastelement ausgebildet ist, welches wenigstens ein elastisch auslenkbares, in einen an der Scheiben-Wischvorrichtung ausgebildeten Rastsitz eingreifendes Federelement aufweist. Eine derartig aufgebaute Baueinheit ist insbesondere handhabungsfreundlich, da bei korrekter Positionierung der Scheiben-Wischvorrichtung in Bezug auf das Halteelement eine automatisch sich einstellende Einrastverbindung erhalten wird, mittels welcher die Scheiben-Wischvorrichtung in dem Halteelement gehalten wird. Dank der sich automatisch einstellenden Einrastverbindung sind aufwendige Montage- beziehungsweise Befestigungshilfsmittel zur Befestigung der Scheiben-Wischvorrichtung an dem Halteelement nicht notwendig. Auch kann mittels einer Einrastverbindung die Anzahl der Konstruktionselemente der Baueinheit auf ein Minimum reduziert werden, so dass die Baueinheit auch hinsichtlich ihres konstruktiven Aufbaus verhältnismäßig einfach ausgebildet sein kann. Am Halteelement ist das Einrastelement ausgebildet und elastisch in einen an einem Wischerlager der Scheiben-Wischvorrichtung ausgebildeten Einrastsitz eingerastet. Da das Wischerlager üblicherweise einen zapfenförmigen Anteil enthält und das Halteelement als Halteblech, insbesondere als verhältnismäßig dünnwandiges Blech, ausgebildet ist, hat es konstruktive und handhabungstechnische Vorteile, am Halteelement das Einrastelement vorzusehen und das Wischerlager mit einem geeignet ausgebildeten Einrastsitz auszustatten, wobei das Einrastelement wenigstens ein elastisch bewegbares Federelement aufweist. Das Federelement kann eine Einrastkante besitzen, die geometrisch an die Umfangsnut angepaßt ist. Somit erstreckt sich das Federelement nach Herstellen der Einrastverbindung entlang wenigstens eines Teils des Umfangs der Umfangsnut.

Gemäß einer bevorzugten Ausführungsform ist der Einrastsitz als eine einen in Längsrichtung geschlossenen Kreis beschreibende Umfangsnut ausgebildet. Eine kreisförmig sich erstreckende Umfangsnut als Einrastsitz ist besonders vorteilhaft für eine Einrastverbindung, da das Einrastelement des Halteelements an einer beliebigen Stelle in die Umfangsnut einrasten kann. Dadurch wird die Montage der Scheiben-Wischvorrichtung an dem Halteelement besonders vereinfacht, da der Einrastsitz des Wischerlagers nicht in besonderer Weise in Bezug auf das Einrastelement besonders ausgerichtet werden muss, sondern es bereits ausreicht, dass die Umfangsnut in die Ebene des Einrastelements positioniert wird, um den automatischen Einrastvorgang auszulösen. Dabei kann der Einrastvorgang durch das Einrastelement an jeder beliebigen Stelle der Umfangsnut erfolgen.

Ein geometrisch an die Umfangsnut angepaßtes, elastisch bewegbares Federelement als Einrastelement ist besonders geeignet, eine bei entsprechender gegenseitigen Positionierung des Einrastelements und des Einrastsitzes automatisch sich einstellende und zuverlässige Einrastverbindung zu gewährleisten.

Dabei ist ein derart ausgebildetes Einrastelement fertigungstechnisch verhältnismäßig einfach herzustellen.

Gemäß einer bevorzugten Ausführungsform ist das Halteelement als Halteblech ausgebildet und besteht das Federelement aus zwei elastisch bewegbaren, zueinander gegenüberliegenden Blechanteilen des Halteblechs. Ein als Halteblech ausgebildetes Halteelement bietet sich besonders an, eine Einrastverbindung mit einem einen Einrastsitz aufweisenden Wischerlager herzustellen. Um eine zuverlässige und vorzugsweise kraftsymmetrische Einrastverbindung zwischen dem Halteelement und der Scheiben-Wischvorrichtung zu erhalten, ist vorgesehen, zwei zueinander gegenüberliegende, elastisch bewegbare Blechanteile im Halteblech zu realisieren, welche gleichzeitig bei geeigneter Positionierung des Wischerlagers der Scheiben-Wischvorrichtung in die Umfangsnut einrasten und das Wischerlager beziehungsweise die Scheiben-Wischvorrichtung in einer definierten Ruheposition halten.

Vorteilhafterweise stehen die Blechanteile in ihrer Einrastposition von einer gemeinsamen Ebene des Halteblechs ab. Die Blechanteile werden automatisch bei der Positionierung der Umfangsnut in Bezug auf das Federelement mittels des teilweise durch das Halteblech zu schiebende Wischerlager in die gewünschte Einrastposition gebracht. Es muss somit nicht vorher eine bestimmte Einrastposition des Halteblechs eingestellt werden, um eine zuverlässige und sichere Rastverbindung zu erhalten, sondern die korrekte Einrastposition der Blechanteile ergibt sich automatisch durch das Wischerlager, welches während der Montage der Scheiben-Wischvorrichtung an dem Halteelement das Halteblech im Bereich der Baueinheit, das heißt zwischen den zueinander gegenüberliegenden, elastisch bewegbaren Blechanteilen, durchdringt. Es sind somit keine speziellen Montage- beziehungsweise Befestigungshilfsmittel oder spezielle Montagevoreinstellungen der Blechanteile notwendig.

Vorzugsweise sind die Einrastkanten der Blechanteile in deren Einrastposition im wesentlichen zueinander ausgerichtet. Dies gewährleistet ein korrektes, definiertes und zuverlässiges Einrasten der Blechanteile mittels ihrer Einrastkanten in die Umfangsnut des Wischerlagers. Dabei wird unter "Einrastkante" derjenige Bereich verstanden, der in der Einrastposition automatisch aufgrund der wirkenden elastischen Rückstellkraft in die Umfangsnut eindringt. In diesem Bereich weisen die Blechanteile eine vorzugsweise konstante Wandstärke auf und bilden mit der Umfangsnut eine formschlüssige Verbindung. Dabei kann die formschlüssige Verbindung zwischen den Einrastkanten der Blechanteile und der Umfangsnut derart ausgebildet sein, dass es nach der Herstellung der Einrastverbindung und bei einer auftretenden elastischen Schwenkung der Blechanteile aus ihrer Einrastposition zu einer elastischen und/oder plastischen Verformung der Einrastkanten der Blechanteile beziehungsweise der Wandungen der Umfangsnut kommt.

Entsprechend einer bevorzugten Ausführungsform stehen die Einrastkanten mit ihren jeweiligen Stirnflächen in der Einrastposition der Blechanteile in Berührungskontakt mit einer Grundfläche der Umfangsnut. Durch den Berührungskontakt der jeweiligen Stirnflächen der Blechanteile in der Einrastposition mit der Grundfläche der Umfangsnut wird gewährleistet, dass die Blechanteile wenigstens in Tiefenrichtung der Umfangsnut spielfrei, oder zumindest in einem Teilabschnitt des Umfangs der Umfangsnut spielfrei, mit dem Wischerlager in einer Einrastverbindung stehen. Dadurch, dass die Blechanteile zueinander gegenüberliegend angeordnet und elastisch bewegbar sind, läßt sich eine solche Spielfreiheit in verhältnismäßig einfacher Weise derart erhalten, dass die Blechanteile vor der Einnahme ihrer Einrastposition durch das Wischerlager gegen eine elastische Rückstellkraft bewegt werden-Diese elastische Rückstellkraft führt die Blechanteile automatisch in ihre Einrastposition und bringt die jeweiligen Stirnflächen der Einrastkanten der Blechanteile in der Einrastposition wenigstens teilweise in Berührungskontakt mit der Grundfläche der Umfangsnut.

Mit Vorteil ist der Blechanteil um eine in der gemeinsamen Ebene des Halteelements liegenden Schwenkachse in zueinander entgegengesetzten Richtungen elastisch bewegbar. Aufgrund der elastischen Bewegbarkeit des jeweiligen Blechanteils in zueinander entgegengesetzten Richtungen ist es einerseits möglich, eine automatisch sich einstellende Einrastverbindung zwischen dem jeweiligen Blechanteil und der Umfangsnut durch die sich einstellende elastische Rückstellkraft zu erhalten, und kann andererseits nach Herstellung der Einrastverbindung bis zu einem bestimmten Grad ein elastisches Verschwenken des jeweiligen Blechanteils in entgegengesetzten Richtungen, das heißt in Richtung auf die Ebene des Halteblechs zu beziehungsweise von dieser Ebene weg, erfolgen. Eine derartige elastische Nachgiebigkeit der Halteelemente nach Herstellung der Einrastverbindung kann einerseits vorteilhaft sein in Bezug auf die Montage/Demontage der Scheiben-Wischvorrichtung am/vom Halteblech, andererseits ist es möglich, dass sich in präziser Weise die Einpreßkraft, welche die Blechanteile bei der Montage zur Herstellung der Einrastverbindung mit dem Wischerlager ausüben, und die Ausdrückkraft, welche zur Demontage des Wischerlagers aus dem Halteblech zur Aufhebung der Einrastverbindung aufzubringen ist, durch geeignete konstruktive Maßnahmen beziehungsweise Ausnutzung von spezifischen Materialeigenschaften der Konstruktionsteile festlegen lassen. Aufgrund einer derartigen Einstellbarkeit der zur Aufhebung der Einrastverbindung aufzubringenden Ausdrückkraft, mittels welcher die Blechanteile aus der Umfangsnut gegebenenfalls unter Ausbildung einer plastischen Verformung der Blechanteile und/oder der Umlaufnut herausgleiten, ist es ferner möglich, besondere Sicherheitsbedürfnisse zu erfüllen, wie zum Beispiel die Anforderung einer ausreichenden Nachgiebigkeit beziehungsweise Freigabe der Scheiben-Wischvorrichtung bei einem Aufprall, insbesondere bei einem Zusammenstoß mit einem menschlichen Körper. Dabei lässt sich die aufzubringende Ausdrückkraft zur Aufhebung der Einrastverbindung und somit zur Freisetzung der Scheiben-Wischvorrichtung wie auch die zur Herstellung der Einrastverbindung zu überwindende Einpreßkraft (elastische Rückstellkraft) durch einen oder mehrere Parameter, wie zum Beispiel Rillentiefe der Umfangsnut oder Wandstärke, Länge und/oder Form der Blechanteile, vorherbestimmen.

Vorzugsweise umfassen die Einrastkanten in der Einrastposition der Blechanteile die Umfangsnut vollständig. In dieser Weise wird in einem möglichst großen Einrastbereich eine schnelle und zuverlässige Einrastverbindung erhalten. Für den Fall, dass mehrere einander gegenüberliegende beziehungsweise nebeneinander liegende Blechanteile vorgesehen sind, welche in der Einrastposition von der Ebene des Halteblechs abstehen, handelt es sich um eine besonders stabile Einrastverbindung, da die Blechanteile in der Einrastposition miteinander in Verbindung stehen und bei einer erzwungenen Bewegung in Richtung Ebene einer eine elastische Stauchung der Blechanteile und gegebenenfalls eine zusätzliche plastische Verformung der Umfangsnut hervorrufenden Druckbeanspruchung ausgesetzt sein würden. Diese Druckbeanspruchung würde sich sowohl zwischen den Blechanteilen untereinander als auch zwischen der Umfangsnut und den jeweiligen Blechanteilen bei einer derartigen erzwungenen Bewegung in Richtung Ebene einstellen.

Gemäß einer alternativen Ausführungsform ist die Scheiben-Wischvorrichtung in mehreren, insbesondere drei voneinander beabstandeten Befestigungspunkten am Halteelement des Fahrzeugs mittels einer jeweiligen Einrastverbindung montiert. Die Herstellung der Einrastverbindung muss nicht notwendigerweise beziehungsweise nicht ausschließlich am Wischerlager erfolgen, sondern es können zusätzliche, zapfenförmige, einen jeweiligen Einrastsitz aufweisende, vorzugsweise zylindrische Verbindungselemente an der Scheiben-Wischvorrichtung vorgesehen sein. Die Einrastverbindung beziehungsweise die dafür notwendigen Konstruktionselemente, insbesondere der Einrastsitz und das zugehörige Einrastelement, können ferner sowohl hinsichtlich ihrer Wirkungsweise als auch in Bezug auf ihre räumliche Anordnung dem jeweiligen Anwendungsfall angepaßt werden.

Vorteilhafterweise sind die Blechanteile aus ihrer Einrastposition in eine von der Ebene wegweisenden Richtung elastisch um ihre Schwenkachse schwenkbar und bei einer entsprechenden Schwenkung in Richtung Ebene einer plastischen Verformung infolge einer sich einstellenden Druckkraft zwischen den Blechanteilen untereinander und/oder zwischen dem jeweiligen Blechanteil und der Umfangsnut des Wischerlagers ausgesetzt. Aufgrund der sich in einer Bewegungsrichtung einstellenden plastischen Verformung der Blechanteile und/oder der Umfangsnut ergibt sich eine verhältnismäßig stabile Einrastverbindung zwischen Blechanteilen und Umfangsnut. Durch eine geeignete Einstellung beziehungsweise Festlegung der die plastische Verformung erzeugenden Druckkraft kann gleichzeitig eine erwünschte Aufhebung der Einrastverbindung auch gegen die sich einstellenden plastischen Verformungskräfte erreicht werden.

Vorzugsweise weist die Baueinheit zur Befestigung der Scheiben-Wischvorrichtung an dem Halteelement nach Herstellung der Einrastverbindung eine zusätzliche Befestigungseinheit auf. Die Rastverbindung erlaubt eine schnelle und besonders effektive Vormontage der Scheiben-Wischvorrichtung an dem Halteelement, so dass bei Bedarf gegebenenfalls anschließend eine zusätzliche Befestigung zum Beispiel mittels einer Schraubverbindung in besonders handhabungsfreundlicher Weise möglich ist. In diesem Fall dient die Baueinheit somit zur korrekten Positionierung und Halterung der Scheiben-Wischvorrichtung an dem Halteelement, während mittels einer Schraubverbindung eine besonders stabile Befestigung der Scheiben-Wischvorrichtung an dem Halteelement erhalten wird.

Weitere vorteilhafte Ausgestaltungen der Erfindung ergeben sich aus den in der Beschreibung genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematischen, perspektivische Ansicht einer zum Teil dargestellten Scheiben-Wischvorrichtung;
- Figur 2: eine schematische, perspektivische Ansicht einer erfindungsgemäßen Baueinheit in vergrößertem Maßstab und
- Figur 3: eine schematische, perspektivische Darstellung einer alternativen Ausführungsform eines erfindungsgemäßen Halteelements der Baueinheit.

### Beschreibung der Ausführungsbeispiele

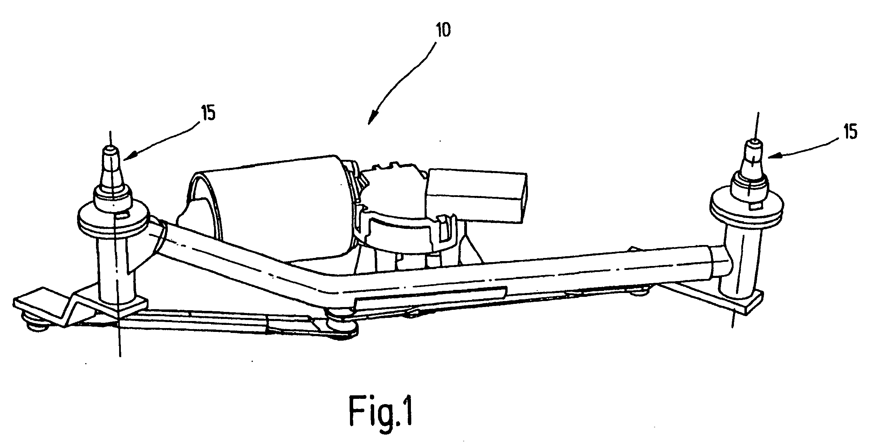

In Figur 1 ist ein Teil einer Scheiben-Wischvorrichtung dargestellt, welche allgemein mit 10 bezeichnet ist. Die Scheiben-Wischvorrichtung 10 enthält zwei Wischerlager 15, welche derart ausgebildet sind, dass sie eine Befestigung der Scheiben-Wischvorrichtung 10 an einem Fahrzeug (nicht dargestellt) erlauben.

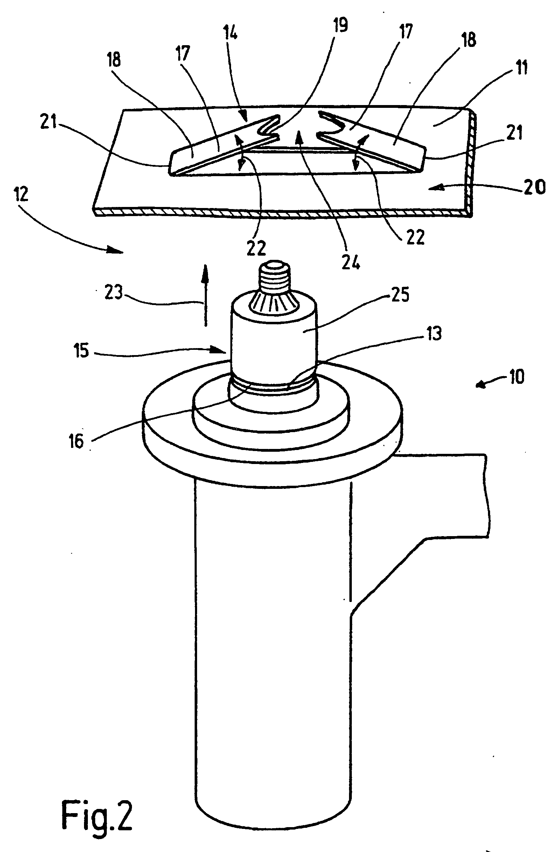

Wie in Figur 2 dargestellt ist, erfolgt die Befestigung der Scheiben-Wischvorrichtung 10 an einem als Halteblech ausgebildeten Halteelement 11 des Fahrzeugs (nicht dargestellt). Dabei sind das Halteelement 11 und das Wischerlager 15 der Scheiben-Wischvorrichtung 10 derart ausgebildet, dass sie zusammen eine Baueinheit 12 bilden. Die Baueinheit 12 weist einen Einrastsitz 13 und ein Einrastelement 14 auf zur Herstellung einer Einrastverbindung zwischen der Scheiben-Wischvorrichtung 10 und dem Halteelement 11. Gemäß dem dargestellten Ausführungsbeispiel ist das Einrastelement 14 am Halteelement 11 ausgebildet und elastisch in den Einrastsitz 13 des Wischerlagers 15 der Scheiben-Wischvorrichtung 10 einrastbar. Es ist allerdings auch denkbar, dass gemäß einer nicht dargestellten Ausführungsform die Scheiben-Wischvorrichtung 10 ein Einrastelement aufweist, das in einen geeignet ausgebildeten Einrastsitz des Halteelement s einrastbar ist.

Der Einrastsitz 13 wird durch eine einen in Längsrichtung geschlossenen Kreis beschreibende Umfangsnut 16 auf einem zylindrischen Zapfen 25 des Wischerlagers 15 gebildet. Das Einrastelement 14 ist als elastisch bewegbares Federelement 17 ausgebildet, das eine Einrastkante 19 aufweist, die geometrisch an die Umfangsnut 16 angepaßt ist. Das Federelement 17 besteht vorzugsweise aus zwei elastisch bewegbaren, zueinander gegenüberliegenden Blechanteilen 18 des Halteblechs, wobei die Blechanteile 18 in ihrer Einrastposition von einer Ebene 20 des Halteblechs derart abstehen, dass die zwei gegenüberliegenden Einrastkanten 19 der zwei Blechanteile 18 eine Durchgangsöffnung 24 bilden. Die Durchgangsöffnung 24 ist bei sich in Ruheposition befindenden Blechanteilen 18 in ihrem Durchmesser kleiner als der Außendurchmesser des zylindrischen Zapfens 25 des Wischerlagers 15. Die Blechanteile 18 sind um eine in der Ebene 20 des Halteelements 11 liegenden Schwenkachse 21 in zueinander entgegengesetzten Richtungen gemäß der Pfeillinie 22, das heißt auf die Ebene 20 zu beziehungsweise von der Ebene 20 weg, elastisch bewegbar.

Wenn das Wischerlager 15 mit seinem zylindrischen Zapfen 25 durch die Durchgangsöffnung 24 zwischen den zwei Blechanteilen 18 in Richtung einer mit 23 bezeichneten Pfeillinie geschoben wird, sind die zwei Blechanteile 18 vorher durch den Zapfen 25 so weit elastisch nach außen geschwenkt worden, das heißt um ihre Schwenkachse 21 in die von der Ebene 20 wegweisenden Richtung entsprechend der Pfeillinie 23, bis die Einrastkanten 19 der Blechanteile 18 an der zylindrischen Außenoberfläche des Zapfens 25 anliegen und bei Bewegung des Zapfens 25 an dessen Außenoberfläche entlanggleiten. Das in der Richtung der Pfeillinie 23 bewegte Wischerlager 15 wird mit seinem zylindrischen Zapfen 25 so weit durch die Durchgangsöffnung 24 geschoben, bis der Zapfen 25 eine Einrastposition erreicht hat, in welcher die Einrastkanten 19 der Blechanteile 18 aufgrund der wirkenden elastischen Rückstellkräfte in die Umfangsnut 16 automatisch einrasten. Nach Herstellung der Einrastverbindung zwischen dem Halteelement 11 (Blechanteile 18) und der Scheiben-Wischvorrichtung 10 (Zapfen 25) wird die Scheiben-Wischvorrichtung 10 durch das Halteblech des Fahrzeugs gehalten.

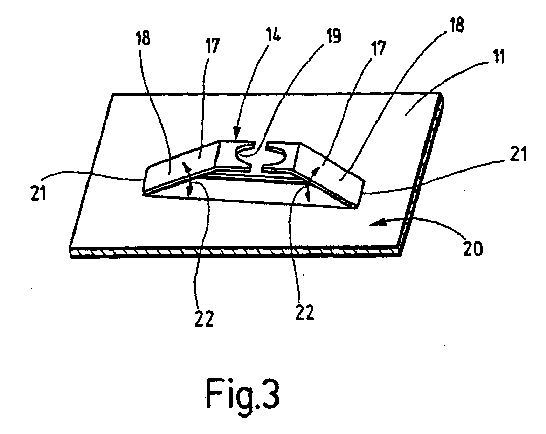

Gemäß einer alternativen Ausführungsform entsprechend Figur 3 sind die Einrastkanten 19 der Blechanteile 18 in deren Einrastposition im wesentlichen zueinander ausgerichtet. Diese Ausführungsform erlaubt es, dass die Einrastkanten 19 mit ihren jeweiligen Stirnflächen (nicht dargestellt) in der Einrastposition der Blechanteile 18 in wenigstens teilweisen Berührungskontakt mit einer Grundfläche der Umfangsnut 16 stehen. Dabei können die Einrastkanten 19 in der Einrastposition der Blechanteile 18 die Umfangsnut 16 zusammen vollständig umfassen beziehungsweise sich nach Herstellung der Einrastverbindung entlang wenigstens eines Teils des Umfangs der Umfangsnut 16 erstrecken. In beiden Fällen sind die Blechanteile 18 aus ihrer Einrastposition bis zu einem gewiessen Grad in eine von der Ebene 20 wegweisenden Richtung elastisch um ihre Schwenkachse 21 schwenkbar. Bei einer größeren Schwenkung um ihre Schwenkachse 21 in Richtung Ebene 20 sind die Blechanteile 18 einer plastischen Verformung infolge einer sich einstellenden Druckkraft zwischen dem jeweiligen Blechanteil 18 und der Umfangsnut 16 des Wischerlagers 15 ausgesetzt. Für den Fall, dass die Blechanteile 18 bereits in Einrastposition miteinander in Berührungskontakt stehen, das heißt, wenn die Blechanteile 18 die Umfangsnut 16 zusammen vollständig umfassen, stellt sich bei einer größeren Schwenkung der Blechanteile 18 um ihre Schwenkachse 21 in Richtung Ebene 20 eine plastische Verformung (Stauchung) der Blechanteile 18 aufgrund der zwischen ihnen wirkenden Druckkraft ein.

Statt der Herstellung einer Einrastverbindung zwischen dem zylindrischen Zapfen 25 des Wischerlagers 15 und dem Halteelement 11 beziehungsweise den Blechanteilen 18 ist es auch möglich, eine entsprechende Verbindung mit anderen an der Scheiben-Wischvorrichtung 10 vorgesehenen Zapfen (nicht dargestellt) herzustellen. Bei einer derartigen Lösung mit einer Mehrzahl von Zapfen zur Herstellung einer Einrastverbindung mit dem Halteblech können vorzugsweise drei, dreieckig angeordnete und ausreichend voneinander entfernte Zapfen zur Verbindung der Scheiben-Wischvorrichtung 10 mit dem Halteblech mittels einer Einrastverbindung vorgesehen werden. Ferner ist es möglich, dass die Baueinheit 12 zur Befestigung der Scheiben-Wischvorrichtung 10 an dem Halteelement 11 nach Herstellung der Einrastverbindung eine zusätzliche Befestigungseinheit (nicht dargestellt), wie zum Beispiel eine Schraubverbindung zwischen der Scheiben-Wischvorrichtung 10 und dem Halteelement 11, aufweist. Vorteilhafterweise kann die bei der Positionierung des Wischerlagers 15 sich einstellende und in Richtung des Pfeils 23 wirkende Einpreßkraft sowie die entgegen der Richtung des Pfeils 23 wirkende und zur Aufhebung der Einrastverbindung notwendige Ausdrückkraft durch einen oder mehrere Parameter, wie zum Beispiel Rillentiefe der Umfangsnut 16 oder Wandstärke, Länge und/oder Form der Blechanteile 18, vorherbestimmt beziehungsweise an die jeweils vorliegenden Gegebenheiten angepaßt werden.

Das Federelement 17 kann aus Metall oder aus einem anderen geeigneten Material hergestellt sein.

Die Baueinheit 12 ist besonders vorteilhaft bei einem Zusammenstoss beispielsweise mit einem menschlichen Körper, da in einer derartigen Situation die Baueinheit 12 elastisch nachgibt beziehungsweise, in Abhängigkeit der Größe der äußeren auf die Baueinheit 12 wirkende Aufprallkraft, die Scheiben-Wischvorrichtung 10 vollständig freigibt und somit gefährliche Verletzungen am auf die Scheiben-Wischvorrichtung 10 aufprallenden menschlichen Körper vollständig oder wenigstens teilweise vermeidet. Die Baueinheit 12 ist somit geeignet, besondere Sicherheitsanforderungen in Bezug auf einen maximalen. Fußgänger-Schutz in effektiver und verhältnismäßig einfacher Weise zu erfüllen. Ein derartiger vorteilhafter Effekt lässt sich allerdings lediglich dann erzielen, wenn die lösbare Befestigung der Scheiben-Wischvorrichtung 10 an dem Halteelement 11 ausschließlich als Einrastverbindung ausgebildet ist und keine zusätzliche Befestigungseinheit, wie zum Beispiel in Form einer Schraubverbindung zwischen der Scheiben-Wischvorrichtung 10 und dem Halteelement 11, vorgesehen ist.

## Patentansprüche

1. Baueinheit (12) aufweisend ein Halteelement (11) und eine Scheiben-Wischvorrichtung (10), wobei die Scheiben-Wischvorrichtung (10) lösbar mit dem Halteelement (11) verbunden ist, **dadurch gekennzeichnet, dass** das Halteelement (11) ein Halteblech ist, aus dessen Grundfläche mindestens ein Einrastelement (14) ausgebildet ist, welches wenigstens ein elastisch auslenkbares, in einen an der Scheiben-Wischvorrichtung (10) ausgebildeten Einrastsitz (13) eingreifendes Federelement (17) aufweist.

2. Baueinheit nach Anspruch 1, **dadurch gekennzeichnet, dass** der Einrastsitz (13) als eine einen in Längsrichtung geschlossenen Kreis beschreibende Umfangsnut (16) ausgebildet ist.

3. Baueinheit nach einem der vorhergehenden Ansprüche, **dadurch gekennzeichnet, dass** das Federelement (17) eine Einrastkante (19) besitzt, die geometrisch an die Umfangsnut (16) angepaßt ist.

4. Baueinheit nach einem der vorhergehenden Ansprüche, **dadurch gekennzeichnet, dass** das Federelement (17) aus zwei elastisch bewegbaren, zueinander gegenüberliegenden Blechanteilen (18) des Halteblechs besteht.

5. Baueinheit nach einem der vorhergehenden Ansprüche, **dadurch gekennzeichnet, dass** die Blechanteile (18) in ihrer Einrastposition von einer Ebene (20) des Halteblechs abstehen.

6. Baueinheit nach einem der vorhergehenden Ansprüche, **dadurch gekennzeichnet, dass** die Einrastkanten (19) der Blechanteile (18) in deren Einrastposition im wesentlichen zueinander ausgerichtet sind.

7. Baueinheit nach einem der vorhergehenden Ansprüche, **dadurch gekennzeichnet, dass** die Einrastkanten (19) mit ihren jeweiligen Stirnflächen in der Einrastposition der Blechanteile (18) in Berührungskontakt mit einer Grundfläche der Umfangsnut (16) stehen.

8. Baueinheit nach einem der vorhergehenden Ansprüche, **dadurch gekennzeichnet, dass** der Blechanteil (18) um eine in der Ebene (20) des Halteelements (11) liegenden Schwenkachse (21) in zueinander entgegengesetzten Richtungen (22) elastisch bewegbar ist.

9. Baueinheit nach einem der vorhergehenden Ansprüche, **dadurch gekennzeichnet, dass** die Einrastkanten (19) in der Einrastposition der Blechanteile (18) die Umfangsnut (16) vollständig umfassen.

10. Baueinheit nach einem der vorhergehenden Ansprüche, **dadurch gekennzeichnet, dass** die Scheiben-Wischvorrichtung (10) in mehreren, insbesondere drei voneinander beabstandeten Befestigungspunkten am Halteelement (11) des Fahrzeugs mittels einer jeweiligen Einrastverbindung montiert ist.

11. Baueinheit nach einem der vorhergehenden Ansprüche, **dadurch gekennzeichnet, dass** die Blechanteile (18) aus ihrer Einrastposition in eine von der Ebene (20) wegweisenden Richtung elastisch um ihre Schwenkachse (21) schwenkbar sind und bei einer entsprechenden Schwenkung in Richtung Ebene (20) einer plastischen Verformung infolge einer sich einstellenden Druckkraft zwischen den Blechanteilen (18) untereinander und/oder zwischen dem jeweiligen Blechanteil (18) und der Umfangsnut (16) des Wischerlagers (15) ausgesetzt sind.

12. Baueinheit nach einem der vorhergehenden Ansprüche, **dadurch gekennzeichnet, dass** die Baueinheit (12) zur Befestigung der Scheiben-Wischvorrichtung (10) an dem Halteelement (11) nach Herstellung der Einrastverbindung eine zusätzliche Befestigungseinheit aufweist.

## Claims

1. Structural unit (12) having a holding element (11) and a windscreen-wiping device (10), the windscreen-wiping device (10) being connected releasably to the holding element (11), **characterized in that** the holding element (11) is a holding plate from whose base is formed at least one latching element (14) which has at least one elastically deflectable spring element (17) which engages in a latching seat (13) formed on the windscreen-wiping device (10).

2. Structural unit according to Claim 1, **characterized in that** the latching seat (13) is designed as a circumferential groove (16) describing a circle which is closed in the longitudinal direction.

3. Structural unit according to one of the preceding claims, **characterized in that** the spring element (17) has a latching edge (19) which is matched geometrically to the circumferential groove (16).

4. Structural unit according to one of the preceding claims, **characterized in that** the spring element (17) comprises two elastically movable, mutually opposite plate parts (18) of the holding plate.

5. Structural unit according to one of the preceding claims, **characterized in that** the plate parts (18) in their latching position protrude from a plane (20) of the holding plate.

6. Structural unit according to one of the preceding claims, **characterized in that** the latching edges (19) of the plate parts (18) in their latching position are essentially aligned with respect to each other.

7. Structural unit according to one of the preceding claims, **characterized in that** the latching edges (19), with their respective end surfaces, are in touching contact with a base of the circumferential groove (16) in the latching position of the plate parts (18).

8. Structural unit according to one of the preceding claims, **characterized in that** the plate part (18) is elastically movable in mutually opposite directions (22) about a pivot axis (21) situated in the plane (20) of the holding element (11).

9. Structural unit according to one of the preceding claims, **characterized in that**, in the latching position of the plate parts (18), the latching edges (19) completely surround the circumferential groove (16).

10. Structural unit according to one of the preceding claims, **characterized in that** the windscreen-wiping device (10) is fitted into a plurality of fastening points on the holding element (11) of the vehicle, in particular into three spaced apart fastening points, by means of a respective latching connection.

11. Structural unit according to one of the preceding claims, **characterized in that** the plate parts (18) are pivotable elastically about their pivot axis (21) from their latching position into a direction pointing away from the plane (20) and, when correspondingly pivoted in the direction of the plane (20), are subject to a plastic deformation as a consequence of a compressive force arising between the plate parts (18) and/or between the respective plate part (18) and the circumferential groove (16) of the wiper bearing (15).

12. Structural unit according to one of the preceding claims, **characterized in that** the structural unit (12) has an additional fastening unit for fastening the windscreen-wiping device (10) to the holding element (11) after production of the latching connection.

## Revendications

1. Unité (12) composée d'un élément de retenue (11) et d'un dispositif d'essuie-glace (10),
ce dispositif d'essuie-glace (10) étant relié de manière amovible à l'élément de retenue (11),
**caractérisée en ce que**
l'élément de retenue (11) est une tôle de retenue avec au moins un élément d'encliquetage (14) formé dans sa surface de base et comporte au moins un élément élastique (17) susceptible d'être dévié élastiquement, pour pénétrer dans un siège d'encliquetage (13) réalisé dans le dispositif d'essuie-glace (10).

2. Unité selon la revendication 1,
**caractérisée en ce que**
le siège d'encliquetage (13) est réalisé sous la forme d'une rainure périphérique (16) décrivant un cercle fermé dans la direction longitudinale.

3. Unité selon l'une quelconque des revendications précédentes,
**caractérisée en ce que**
l'élément de ressort (17) comporte une arête d'encliquetage (19) dont la géométrie est adaptée à celle de la rainure périphérique (16).

4. Unité selon l'une quelconque des revendications précédentes,
**caractérisée en ce que**
l'élément de ressort (17) se compose de deux pièces en tôle (18) opposées l'une à l'autre, pouvant s'écarter élastiquement et faisant partie de la tôle de retenue.

5. Unité selon l'une quelconque des revendications précédentes,
**caractérisée en ce que**
les pièces en tôle (18) sont en saillie du plan (20) de la tôle de retenue lorsqu'elles sont en position encliquetée.

6. Unité selon l'une quelconque des revendications précédentes,
**caractérisée en ce que**
les arêtes d'encliquetage (19) des pièces en tôle (18) sont principalement alignées l'une par rapport à l'autre en position encliquetée.

7. Unité selon l'une quelconque des revendications précédentes,
**caractérisée en ce que**
les arêtes d'encliquetage (19) sont en contact avec la surface du fond de la rainure périphérique (16) par leurs surfaces frontales respectives en position encliquetée des pièces en tôle (18).

8. Unité selon l'une quelconque des revendications précédentes,
**caractérisée en ce que**
la pièce en tôle (18) est mobile élastiquement dans des directions opposées (22) autour d'un axe de pivotement (21) situé dans le plan (20) de l'élément de retenue (11).

9. Unité selon l'une quelconque des revendications précédentes,
**caractérisée en ce que**
les arêtes d'encliquetage (19) entourent complètement la rainure périphérique (16) dans la position encliquetée des pièces en tôle (18).

10. Unité selon l'une quelconque des revendications précédentes,
**caractérisée en ce que**
le dispositif d'essuie-glace (10) est installé dans plusieurs points de fixation notamment trois points de fixation écartés les uns des autres sur l'élément de retenue (11) du véhicule à l'aide d'une liaison respective par encliquetage.

11. Unité selon l'une quelconque des revendications précédentes,
**caractérisée en ce que**
les pièces en tôle (18) peuvent basculer élastiquement autour de leur axe de basculement (21) à partir de leur position encliquetée dans une direction s'écartant du plan (20) et pour un basculement correspondant en direction du plan (20) les pièces sont exposées à une déformation plastique à cause de la pression qui s'établit alors entre les pièces en tôle (18) entre elles et/ou entre chaque pièce en tôle (18) et la rainure périphérique (16) du contre-appui (15).

12. Unité selon l'une quelconque des revendications précédentes,
**caractérisée en ce qu'**
elle comporte une unité de fixation supplémentaire pour fixer le dispositif d'essuie-glace (10) à l'élément de retenue (11) après la réalisation de la liaison encliquetée.
